**Europäisches Patentamt**

**European Patent Office**

**Office européen des brevets**

(19)

(11) Veröffentlichungsnummer : **0 072 364**
**B1**

(12) **EUROPÄISCHE PATENTSCHRIFT**

(45) Veröffentlichungstag der Patentschrift :
22.10.86

(21) Anmeldenummer : 82890108.2

(22) Anmeldetag : 29.07.82

(51) Int. Cl.⁴ : **C 08 J 9/32**, C 08 L 75/04//
A43B5/04, A43B7/28,
B68G11/04

(54) **Verfahren zur Herstellung einer Masse für die Abstützung von Teilen, insbesondere von Teilen des menschlichen Körpers und eine solche Masse.**

(30) Priorität : 29.07.81 DE 3129888

(43) Veröffentlichungstag der Anmeldung :
16.02.83 Patentblatt 83/07

(45) Bekanntmachung des Hinweises auf die Patenterteilung : 22.10.86 Patentblatt 86/43

(84) Benannte Vertragsstaaten :
AT BE CH FR GB IT LI NL SE

(56) Entgegenhaltungen :
EP-A- 0 029 021
DE-A- 1 720 181
DE-B- 2 519 910
US-A- 3 714 110

(73) Patentinhaber : SECANS AG
c/o Dr. Barth Gartenstrasse 2
CH-6300 Zug (CH)

(72) Erfinder : Schaefer, Helmut
Winzlerstrasse 114
D-6780 Pirmasens (DE)
Erfinder : Schaefer, Philipp
Oberstrasse 16
D-3000 Hannover 1 (DE)

(74) Vertreter : Boeckmann, Peter, Dipl.-Ing. et al
Patentanwälte Dipl.-Ing. Peter Boeckmann, Dipl.-Ing.
Leo Brauneiss Strohgasse 10
A-1030 Wien (AT)

## Beschreibung

Die Erfindung betrifft ein Verfahren zur Herstellung einer Masse für die Abstützung von Teilen, insbesondere von Teilen des menschlichen Körpers, auf der Basis eines Mikrohohlkugeln enthaltenden Kunststoffes mit Polyurethanverknüpfung. Ferner betrifft die Erfindung eine solche Masse für die Abstützung von Teilen, insbesondere von Teilen des menschlichen Körpers.

Es sind bereits Polster bekannt, die eine Füllung aus einer schaumartigen Kunststoffmasse aufweisen, welche sich unter Druck der Form von abzustützenden Teilen, insbesondere des menschlichen Körpers, anpaßt. Bei einem aus der DE-PS 2 336 136 bekanntgewordenen Polster besteht die in einer dünnen Hülle aus flächigem Material, beispielsweise einem Gewebe, angeordnete Füllmasse aus thermoplastischen Mikrohohlkugeln, die mittels einer geringen Menge einer bei Körpertemperatur flüssigen oder pastösen Substanz trennbar miteinander verbunden sind. Die Füllmasse besitzt hiebei eine sehr geringe Dichte von 0,02 bis 0,3. Derartige bekannte Polster sind besonders geeignet für Anwendungsgebiete, wo die an die Körperteile angepaßte Form auch in Zukunft beibehalten wird, also beispielsweise bei Skischuhen, die stets von der gleichen Person getragen werden. Sollen hingegen die bereits eine bestimmte Form aufweisenden Polster an einen anderen Körperteil angepaßt werden, so müssen diese Polster, da sie überhaupt keine zugelastischen Eigenschaften aufweisen, vor dem Anpassen an den anderen Körperteil zunächst in ihre ursprüngliche Form gebracht werden. Aus diesem Grunde sind die bekannten Polster für bestimmte Anwendungsgebiete, beispielsweise als Sitzpolster für Bureaustühle, Fahrzeugsitze, Krankenstühle, oder für Matratzen, beispielsweise für bettlägerige Patienten zur Vermeidung eines Decubitus, nicht oder zumindest nur schlecht geeignet, weil eine einer Bewegung folgende Anpassung nicht unmittelbar erfolgt, sondern nur über eine Zwischenstufe, bei der der Polster in seine ursprüngliche Form gebracht werden muß.

Ein weiterer Nachteil dieser bekannten Polster besteht darin, daß bei großflächigen Polstern, also beispielsweise bei Matratzen, die Füllmasse durch das Gewicht der auf dem Polster liegenden Person zum größten Teil seitlich ausweicht, so daß dann nicht mehr genügend Masse für die erforderliche weiche Unterstützung dieser Person zur Verfügung steht.

Es sind auch Polster für Schuhe bekannt, bei welchen in einer Hülle, beispielsweise aus einer Polyvinylchlorid-Folie, eine tixotrope oder hochviskose Masse, wie beispielsweise ein mit Silikaten gefülltes Öl oder ein flüssiger Kunststoff, eingefüllt ist (US-Psen 3 237 319, 3 402 411, 3 635 849, 3 882 561). Diese Polster besitzen zwar plastische Eigenschaften und passen sich unter Druck den abzustützenden Teilen gut an, sind jedoch schwer und verfügen über keine druck- und zugelastischen Eigenschaften, so daß der erwünschte Abstützungskomfort fehlt. Ferner stellen sich die verformten Polster ohne äußere Krafteinwirkung nicht mehr zurück, es ist vielmehr für jede Veränderung ihrer Form die Einwirkung einer Kraft von außen erforderlich.

Bei einem anderen bekannten Polster besteht die Füllung aus thermoplastischen Mikrohohlkugeln, die mittels eines Polysulfides oder Polysiloxans untrennbar und elastisch miteinander verbunden sind (DE-PS 2 519 910). Diese Polster passen sich nur unter hohem dynamischen Druck an eine bestimmte Körperform an und sind daher optimal nur dort anwendbar, wo ein solcher hoher Druck auf eine kleine Fläche wirkt, wie beispielsweise bei orthopädischen Einlagen oder bei Krücken, weil sie nach vollzogener Anpassung noch druckelastisch bleiben. Für Sitzkissen und Matratzen zur Vermeidung von Decubitus sind diese bekannten Polster ungeeignet, weil der dabei auftretende Druck nicht für eine vollständige Anpassung ausreicht.

Die aus der EP-A 0029 021 bekannten Formteile bestehen aus einem durch den Einschluß von Mikrohohlkugeln modifizierten Polyurethan, das in üblicher Weise aus Polyolen und Isocyanat hergestellt ist.

Unabhängig davon ist es aus der US-A 3 714 110 bekannt, Kohlenwasserstoffstreckmittel bei der PU-Herstellung aus Polyhydroxydienpolymeren und Polyisocyanaten zuzusetzen. Diese ölmodifizierten Kunststoffe sind als solche jedoch nicht zum Bau von Stützmaterialien für Teile des menschlichen Körpers geeignet.

Das erfindungsgemäße Verfahren zur Herstellung einer Masse für die Abstützung von Teilen, insbesondere von Teilen des menschlichen Körpers, auf der Basis eines Mikrohohlkugeln enthaltenden Kunststoffes mit Polyurethanverknüpfung ist nun dadurch gekennzeichnet, daß gegenüber Isocyanat inertes Mineralöl oder flüssiges Polyisobutylen, ungesättigte flüssige Kohlenwasserstoffe mit endständigen Hydroxylgruppen, vorzugsweise Polybutadien, und ein bei der Polyurethanherstellung üblicher Vernetzer, beispielsweise Äthylhexandiol, miteinander vermischt werden, daß dieser Mischung oder einem diese Mischung bildenden Bestandteil entweder vorgeformte Mikrohohlkugeln, deren dünne Hülle aus Vinylidenchlorid-Copolymerisat besteht und deren Inneres ein Gas enthält, oder ein Treibmittel enthaltende Teilchen aus Vinylidenchlorid-Copolymerisat beigemengt werden, aus welchen sich durch Erwärmung der Mischung auf eine Temperatur zwischen 92 °C und 165 °C, vorzugsweise von 105 °C, die erwähnten Mikrohohlkugeln in situ bilden, und daß hierauf, gegebenenfalls nach Hinzufügen eines Katalysators, die Mischung mit einem Polyisocyanat zusammengebracht und intensiv vermischt wird, mit dem die ungesättigten flüssigen Kohlenwasserstoffe zur Reaktion gebracht werden, worauf das Gemisch, beispielsweise in einer Form, reagieren gelassen wird.

Die Mikrohohlkugeln können somit vorgefertigt dem Gemisch beigemengt werden oder im Gemisch *in situ* dadurch gebildet werden, daß entsprechende ein Treibmittel enthaltende Kompaktteilchen durch Wärmezufuhr aufgebläht werden. Höhere Temperaturen als 165 °C sollen bei der Herstellung der Mikrohohlkugeln *in situ* vermieden werden, weil dadurch die dünnen Hüllen der Mikrohohlkugeln beschädigt werden könnten.

Die erfindungsgemäße Masse paßt sich bereits bei einem geringen Druck einer vorgegebenen Körperform vollständig an, wirkt nach ihrer Anpassung mit sehr geringem, nicht störenden Entspannungsdruck auf den betreffenden Teil, stellt sich nach Aufhören des von diesem Teil ausgeübten Druckes, also nach Entfernen dieses Teiles, selbsttätig wieder zurück und muß nicht erst manuell in ihre Ausgangsform gebracht werden. Außerdem besitzt die Masse ein geringes Gewicht und ist einfach herstellbar.

Die Masse besitzt sowohl plastische als auch elastische Eigenschaften, wobei sich diese Eigenschaften jeweils in der gewünschten Weise auswirken, ohne daß die Nachteile der bekannten plastischen Massen und der bekannten elastischen Massen wirksam werden. Bei den Temperaturen, die beim Gebrauch der erfindungsgemäßen Masse normalerweise auftreten, verhält sich diese Masse bei einer Druckausübung ähnlich wie sehr weicher Gummi, gewährleistet somit eine gute elastische Abstützung der betreffenden Teile. Die erfindungsgemäße Masse paßt sich aber auch gut der Form der jeweiligen Teile an, wobei sie sich nach vollzogener Verformung zug- und druckelastisch träge verhält, so daß auf die abzustützenden Teile keine merkbare Rückstellkraft einwirkt, welche als unangenehm empfunden wird. Diese Eigenschaften ergeben sich durch die Kombination der beiden flüssigen Kohlenwasserstoffe, von welchen der ungesättigte mit dem vorzugsweise aus Polyisocyanat bestehenden Reaktionsmittel zur Reaktion gebracht wird. Die in die Masse eingebetteten Mikrohohlkugeln geben der Masse eine schaumartige Konsistenz und verringern das Gewicht der Masse in gewünschter Weise. Außerdem sind die Mikrohohlkugeln infolge ihrer Füllung mit einem Gas druckelastisch, wodurch die Abstützeigenschaften der erfindungsgemäßen Masse weiter verbessert werden. Zusätzlich verhindern die Mikrohohlkugeln das Zusammenkleben der durch Isocyanatreaktion entstandenen Zellen.

Die nach dem erfindungsgemäßen Verfahren hergestellte Masse ist vor allem für die Abstützung von Teilen des menschlichen Körpers besonders vorteilhaft anwendbar, da sie sich auch bei einem geringen Druck, der von den Körperteilen auf die Masse ausgeübt wird, rasch an die Form dieser Körperteile anpaßt, jedoch nach vollzogener Anpassung nur einen geringen und daher nicht störenden Rückstelldruck auf diese Körperteile ausübt, jedoch bei Druckentlastung sich selbsttätig wieder zurückstellt. So ist die erfindungsgemäße Masse besonders vorteilhaft anwendbar als Füllmasse für Anti-Decubitus-Unterlagen, aber auch als Füllmasse für Polster beispielsweise für Sturzhelme, Schuhe, insbesondere Skischuhe, Matratzen jeglicher Art, Sitzpolster beispielsweise für Bureaustühle, Fahrzeugsitze und Krankenstühle, kann aber auch für Hinterfütterungen von Zahnprothesen Verwendung finden.

Neben den gesättigten Mineralölen wird zweckmäßig Polyisobutylen, und zwar niedermolekulares Polyisobutylen mit einem Molekulargewicht zwischen 500 und 15 000 verwendet. Ein solches Polyisobutylen ist mit den im wesentlichen ungesättigten, vorzugsweise aus Polybutadien bestehenden flüssigen Kohlenwasserstoffen gut mischbar, entmischt sich bei Beendigung des Misch- bzw. Rührvorganges nicht und reagiert kaum mit den NCO-Gruppen des das Reaktionsmittel bildenden Polyisocyanates. Diese im wesentlichen gesättigten flüssigen Kohlenwasserstoffe tragen zu einer weitmaschigen Vernetzung des Polybutadiens bei, ohne aus der fertigen Masse auszuschwitzen oder zu emigrieren. Dadurch erhält die Masse die erwähnten günstigen Eigenschaften, verhält sich also sowohl plastisch als auch elastisch.

Der Anteil der Mineralöle bzw. des Polyisobutylens in bezug auf den Anteil der ungesättigten flüssigen Kohlenwasserstoffe kann bei der Masse in gewissen Grenzen variieren. Je größer dieses Verhältnis ist, desto besser sind die plastischen Eigenschaften der Masse und umso träger wird die Masse in Bezug auf ihre zug- und druckelastischen Eigenschaften. Zweckmäßig beträgt das Verhältnis zwischen dem Anteil der Mineralöle bzw. des Polyisobutylens und dem Anteil der ungesättigten Kohlenwasserstoffe zwischen 2,5 : 1 und 1 : 3, vorzugsweise 1 : 1. Ein geringerer Anteil an Mineralöl bzw. Polyisobutylen ist nicht empfehlenswert, da sonst die erfindungsgemäße Masse keine ausreichenden plastischen Eigenschaften mehr aufweist.

Die einen Bestandteil der Masse bildenden Mikrohohlkugeln weisen vorteilhaft einen Durchmesser zwischen 0,01 und 0,1 mm auf. Diese Mikrohohlkugeln, deren dünne Hülle aus Vinylidenchlorid-Copolymerisat besteht und deren Inneres ein Gas enthält, verhalten sich gegenüber dem das Reaktionsmittel bildenden Polyisocyanat und gegenüber den ungesättigten flüssigen Kohlenwasserstoffen inert und verbessern wesentlich die trägen zug- und druckelastischen Eigenschaften der Masse.

In dem mittels des vorzugsweise aus Polyisocyanat bestehenden Reaktionsmittels und eines Vernetzers beispielsweise aus Äthylhexandiol weitmaschig vernetzten Polybutadien befinden sich chemisch quasi ungebunden somit nicht nur der im wesentlichen gesättigte flüssige Kohlenwasserstoff, sondern auch die Mikrohohlkugeln, denn beide sind am Aufbau der molekularen Struktur der Masse nicht oder kaum beteiligt. Sowohl die im wesentlichen gesättigten Kohlenwasserstoffe als auch die Mikrohohlkugeln sind somit inaktiv hinsichtlich der molekularen Funktion, ihre Wirkung auf die Eigenschaften der erfindungsgemäßen Masse ist jedoch wesentlich und sie sind, trotzdem sie quasi ungebunden in der Masse liegen, ein fest integrierter Bestandteil dieser Masse, der nicht entweichen kann.

Die nach dem erfindungsgemäßen Verfahren hergestellte Masse besitzt ausschließlich geschlossene Zellen und verhält sich eher thermoelastisch als thermoplastisch, d. h., die Eigenschaften der Masse sind in einem breiten Temperaturbereich nahezu gleich. Dies ermöglicht unter anderem ein Sterilisieren mittels Hitze von mit der Masse gefüllten Polstern, was beispielsweise bei Anti-Decubitus-Unterlagen erforderlich ist.

Durch die Mikrohohlkugeln wird weiters die Dichte der Masse wesentlich verringert. Diese Dichte beträgt zwischen 0,20 und 0,85, vorzugsweise zwischen 0,35 und 0,55. Die druckelastischen Mikrohohlkugeln verhindern weiters das Zusammenkleben der Zellen beim Zusammenstauchen.

Die Eigenschaften der Masse können noch dadurch verbessert werden, daß der Mischung, aus welcher die Masse gebildet wird, zusätzlich Füllstoffe, beispielsweise Riechstoffe, Pigmente und/oder Stabilisatoren beigemengt werden.

Vorteilhaft werden der Mischung, aus welcher die Masse gebildet wird, Stoffe beigemengt, die der Masse eine klebrige Eigenschaft verleihen. Die Masse besitzt dann einen gewissen Selbstklebeeffekt, der dafür ausgenützt werden kann, die Masse bzw. einen von dieser Masse gebildeten Polster, der an zumindest einer Seite ohne Abdeckung ist, mit dieser Seite an einer bestimmten Stelle ohne zusätzliche Maßnahmen zu fixieren. Es entsteht auf diese Weise eine Haftverklebung, welche in der Regel ausreichend ist, um beispielsweise die Innenpolsterung eines Sturzhelmes oder eines Skischuhes mit der festen Schale zu verbinden.

Es ist nicht erforderlich, daß die Masse in einen Überzug eingeschlossen ist. Beispielsweise bei Verwendung als Hinterfütterung für Zahnprothesen wird die Masse ohne Hülle verwendet. Für andere Verwendungszwecke ist es jedoch von Vorteil, wenn die Masse zumindest teilweise abgedeckt ist. Um dies zu erreichen, kann vor dem Einbringen des Gemisches in eine Form in diese eine Schicht, vorzugsweise aus luftdurchlässigem Material, oder eine Folie, beispielsweise aus Polyäthylen, eingelegt werden, so daß nach dem Entformen die Masse zumindest teilweise durch diese Schicht oder Folie abgedeckt ist.

Obwohl die nach dem erfindungsgemäßen Verfahren hergestellte Masse unter geringem Druck knetbar ist, weist diese Masse doch einen solchen inneren Zusammenhang auf, daß als Schicht ein textiles Material und/oder ein natürliches oder künstliches Fell verwendet werden kann, ohne daß die Gefahr besteht, daß die Masse durch die Schicht hindurchwandert. Die Verwendung eines textilen Materiales bzw. eines Felles als Abdeckung weist gegenüber Kunststoffolien einen wesentlichen Vorteil auf, da solche Kunststoffolien schlechte hygienische Eigenschaften besitzen.

Es kann aber auch als Schicht eine Schuhsohle verwendet werden, in welchem Fall die Masse bei ihrer Herstellung direkt an diese Schuhsohle angeformt wird und dadurch eine gute Abstützung des Fußes gewährleistet ist.

Eine andere Möglichkeit besteht darin, daß als Form die Ausnehmung eines Formkörpers, vorzugsweise aus einem elastomeren Schaum, beispielsweise aus PUR-Schaum oder aus Polyäthylenschaum, verwendet wird, in welchem Formkörper die ausreagierte Masse verbleibt. Auch hier wird die Masse unmittelbar mit dem Formkörper verbunden, der als Ganzes, also zusammen mit der Masse, für die Abstützung von Teilen, insbesondere von Teilen des menschlichen Körpers, herangezogen wird. Dadurch können die für die Abstützung maßgebenden Eigenschaften des elastomeren Schaumes bzw. des PUR-Schaumes oder des Polyäthylenschaumes mit den Eingenschaften der erfindungsgemäßen Masse kombiniert werden, wobei die Gesamteigenschaften des so gebildeten Polsters abhängig sind vom Verhältnis des Volumens des elastomeren Schaumes zum Volumen der Masse. Rückstelldruck und Rückstellzeit können so noch weiter den jeweiligen Anforderungen angepaßt werden. Eine solche Anpassung ist deshalb zweckmäßig, da beispielsweise bei Verwendung der Masse für Patienten, die sich wenig bewegen, es zur Vermeidung eines Decubitus wichtiger ist, daß ein geringer Rückstelldruck nach der Anpassung auftritt als daß eine rasche Rückstellung nach eingetretener Druckentlastung erfolgt. Bei Verwendung beispielsweise für Sitzpolster von Bureaustühlen ist es wiederum von Vorteil, daß eine möglichst rasche Rückstellung nach der Anpassung Vorrang hat vor einem geringen Rückstelldruck während der Belastung.

Der Formkörper kann hiebei wenigstens eine nach einer Seite offene Ausnehmung aufweisen, in welche das Gemisch eingefüllt wird, wobei diese Ausnehmung nach dem Einfüllen des Gemisches durch eine Folie oder Schicht abgedeckt wird. Die Ausnehmungen können hiebei an den Stellen angeordnet werden, wo eine Abstützung mit der erfindungsgemäßen Masse erwünscht ist. So kann beispielsweise als Formkörper eine Schuhsohle, insbesondere eine Einlagesohle oder eine Zwischensohle, verwendet werden, wobei die Ausnehmungen im Bereich des Ballens und der Ferse vorgesehen sind. Vorzugsweise wird hiebei das Gemisch in die Ausnehmungen in einer solchen Menge eingefüllt, daß die Masse ein wenig aus der Ausnehmung herausragt. Die Verwendung einer erfindungsgemäßen Masse an den erwähnten Stellen einer beispielsweise aus PUR-Schaum oder aus Polyäthylenschaum bestehenden Schuhsohle von Sportschuhen verhindert infolge der dämpfenden und trägen Eigenschaften der erfindungsgemäßen Masse Gelenkschäden. Wird als Sohlenmaterial Polyäthylenschaum verwendet, so wird dieser an den besonders stark druckbeanspruchten Stellen sehr zusammengedrückt und verliert dadurch seine guten Abstützungseigenschaften. Werden jedoch diese Stellen mit der erfindungsgemäßen Masse hinterlegt, dann bewirkt diese die erwünschte dämpfende Abstützung und verhindert auch, daß der Polyäthylenschaum zusammenfällt, da der Druck zum Großteil von der erfindungsgemäßen Masse aufgenommen wird. Ragt, wie dies bei einer bevorzugten Ausführungsform der Fall ist, die erfindungsgemäße Masse etwas aus der Ausnehmung heraus, so wird sichergestellt, daß vom Fuß auf diese Masse ein solcher Druck ausgeübt wird, daß sich die Masse entsprechend verformt, also der Form des Fußes an den betreffenden Stellen anpaßt. Dadurch wird eine optimale Abstützung des Fußes erzielt.

Eine weitere Möglichkeit, die Masse herzustellen und gleichzeitig mit einem Formkörper zu verbinden, besteht darin, daß die Masse in einer Form vorgeformt wird, daß dann die vorgeformte Masse in eine den Abmessungen eines herzustellenden Formkörpers entsprechende weitere Form eingelegt wird, und daß dann der freibleibende Raum dieser weiteren Form mit einem den Formkörper bildenden, vorzugsweise polyurethanbildenden, Material ausgefüllt wird. Auch in diesem Fall verbindet sich die Masse ohne zusätzliche Maßnahmen fest mit dem Formkörper und nimmt in Bezug auf den Formkörper die gewünschte Lage ein.

Es ist aber auch möglich, die Masse in einer Form vorzuformen und an einem in einer weiteren Form vorgeformten Formkörper, vorzugsweise aus Polyäthylenschaum oder PUR-Schaum, beispielsweise durch Kleben zu befestigen.

Die Erwärmung der Mischung, welche zur Bildung der Mikrohohlkugeln *in situ* aus den Kompaktteilchen aus Vinylidenchlorid-Copolymerisat erforderlich ist, kann durch Wärmezufuhr von außen vorgenommen werden. Besonders vorteilhaft ist es aber, wenn die Erwärmung der Mischung infolge der bei Anwesenheit des Katalysators auftretenden Reaktionstemperatur erfolgt. In diesem Fall wird nicht nur eine Wärmezufuhr von außen unnötig, sondern es wird auch eine gleichmäßige Erwärmung der gesamten Mischung sichergestellt, so daß auch eine gleichmäßige Bildung der Mikrohohlkugeln in der Mischung erfolgt. Bei einer Wärmezufuhr von außen hingegen ist selbst beim Rühren bzw. Mischen eine gleichmäßige Erwärmung nicht sichergestellt.

Bei Anwendung des erfindungsgemäßen Verfahrens zur Herstellung der Masse erfolgt durch die Mischung der im wesentlichen gesättigten flüssigen Kohlenwasserstoffe wie beispielsweise Polyisobutylen mit den ungesättigten flüssigen Kohlenwasserstoffen, vorzugsweise Polybutadien, welches OH-Gruppen enthält, durch Zugabe des aus Polyisocyanat bestehenden Reaktionsmittels eine Kettenverlängerung bei gleichzeitiger Vernetzung mittels des Vernetzers, wobei durch die Anwesenheit der Mikrohohlkugeln, deren dünne Hülle aus einem Vinylidenchlorid-Copolymerisat besteht, eine Quasi-Schaumstruktur geschaffen wird, ohne daß die molekulare Funktion der Masse hiedurch verändert wird.

Die erfindungsgemäße Masse weist eine Dichte von etwa 0,20 bis 0,85, eine Bruchdehnung von mehr als 420 % und eine Härte nach Shore A von 1 bis 25 auf. Bereits bei einem Druck von weniger als $1N/cm^2$ innerhalb einer Minute deformiert sich die Masse im wesentlichen durch seitliches Abfließen erheblich und paßt sich den abzustützenden Teilen an. Nach dem Aufhören des Verformungsdruckes genügt ein sehr geringer, kaum meßbarer Druck, um die Masse in der angepaßten Form zu halten. Nach völliger Druckentlastung stellt sich die Masse wieder allmählich vollständig oder nahezu vollständig in die Ausgangslage zurück. Die Rückstellgeschwindigkeit ist im wesentlichen abhängig vom Anteil der im wesentlichen gesättigten Kohlenwasserstoffe. Je größer dieser Anteil ist, desto besser sind die plastischen Eigenschaften der Masse und umso langsamer erfolgt die Rückstellung bzw. umso größer ist der verbleibende Rest der Verformung, der sich nach völliger Druckentlastung nicht mehr zurückstellt. Aus diesem Grund ist ein Anteil von weniger als 50 % an im wesentlichen gesättigten Kohlenwasserstoffen nicht empfehlenswert.

Im folgenden wird die Herstellung der erfindungsgemäßen Masse an Hand von zwei Beispielen näher erläutert :

Beispiel 1

100 Gew.-Teile Polybutadien mit der Bezeichnung « Poly bd R45HT » werden mit 104 Gew.-Teilen Polyisobutylen mit einem Molekulargewicht von ca. 3000, in dem 6 Gew.-Teile Mikrohohlkugeln mit einer dünnen Hülle aus Vinylidenchlorid-Copolymerisat enthalten sind, die aus ein Treibmittel enthaltenden Kompaktteilchen bei einer Temperatur von 105 °C im Polyisobutylen hergestellt wurden, zusammengebracht und miteinander vermischt. Danach werden 3 Gew.-Teile Äthylhexandiol als Vernetzer und 0,8 Gew.-Teile « Dabco DC2 » als Katalysator diesem Ansatz beigemischt und in ihm verteilt. 100 g dieses Gemisches werden mit 12 g Polyisocyanat « Desmodur ® PF » zusammengebracht und einige Sekunden intensiv vermischt. Nach ca. 5 min. bei Raumtemperatur entsteht aus der kurz nach dem Vermischen noch flüssigen Masse eine knetbare Masse mit plastischen und elastischen Eigenschaften, die eine Dichte von 0,5, eine Härte nach Shore A von ca. 2 und eine Bruchdehnung von 750 % aufweist.

Beispiel 2

100 Gew.-Teile Polybutadien mit der Bezeichnung « Poly bd R45HT » werden mit 75 Gew.-Teilen Mineralöl und mit 5 Gew.-Teilen fertiger trockener Mikrohohlkugeln mit einer dünnen Hülle aus Vinylidenchlorid-Copolymerisat sowie mit 3 Gew.-Teilen Äthylhexandiol und 0,7 Gew.-Teilen « Dabco ® DC2 » als Katalysator vermischt.

100 g dieser Mischung werden mit 15 g Polyisocyanat « Desmodur ® PF » intensiv vermischt. Nach ca. 4 min. ist die flüssige schaumartige Masse fest und besitzt plastische und elastische Eigenschaften. Die Masse weist eine Dichte von ca. 0,5, eine Härte nach Shore A von ca. 5 und eine Bruchdehnung von mehr als 700 % auf.

Polybutadien der Type « Poly bd R45HT » ist von der Firma Metallgesellschaft AG in Frankfurt am Main zu beziehen.

Polyisocyanat der Type « Desmodur ® PF » ist bei der Firma Bayer Aktiengesellschaft in Leverkusen erhältlich.

Der Katalysator « Dabco ® DC2 » ist von der Firma Hüls-Chemische Fabriken in Marl (BRD) zu beziehen.

Die Kompaktteilchen, aus welchen die Mikrohohlkugeln gebildet werden, sind unter der Bezeichnung « Expacel » von der Firma Kema-Nord in Sundvall (Schweden) erhältlich.

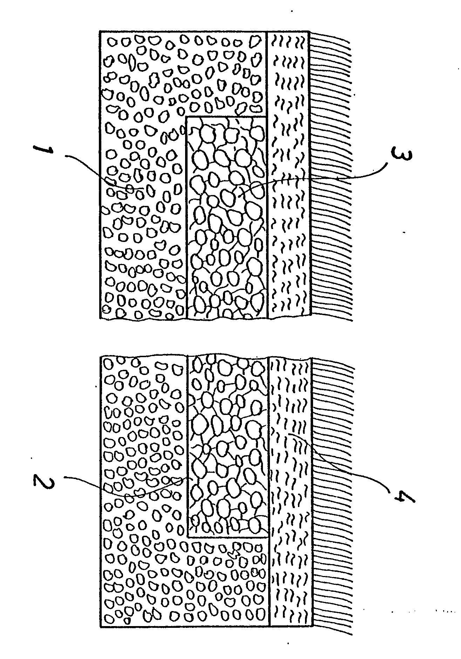

Die Zeichnung stellt im Querschnitt einen mit einer erfindungsgemäßen Masse gefüllten Polster dar.

In einem Formkörper 1 aus PUR-Schaum befindet sich eine nach einer Seite offene Ausnehmung 2, in der die erfindungsgemäße Masse 3 eingebettet ist. Zweckmäßig bildet der Formkörper 1 die Form bei der Herstellung der Masse 3. Die Ausnehmung 2 ist durch eine Schicht 4 abgedeckt, die beim dargestellten Ausführungsbeispiel aus einer Fellimitation besteht, jedoch auch aus einem textilen Material gebildet sein kann.

### Patentansprüche

1. Verfahren zur Herstellung einer Masse für die Abstützung von Teilen, insbesondere von Teilen des menschlichen Körpers, auf der Basis eines Mikrohohlkugeln enthaltenden Kunststoffes mit Polyurethanverknüpfung, dadurch gekennzeichnet, daß gegenüber Isocyanat inertes Mineralöl oder flüssiges Polyisobutylen, ungesättigte flüssige Kohlenwasserstoffe mit endständigen Hydroxylgruppen, vorzugsweise Polybutadien, und ein bei der Polyurethanherstellung üblicher Vernetzer, beispielsweise Äthylhexandiol, miteinander vermischt werden, daß dieser Mischung oder einem diese Mischung bildenden Bestandteil entweder vorgeformte Mikrohohlkugeln, deren dünne Hülle aus Vinylidenchlorid-Copolymerisat besteht und deren Inneres ein Gas enthält, oder ein Treibmittel enthaltende Teilchen aus Vinylidenchlorid-Copolymerisat beigemengt werden, aus welchen sich durch Erwärmung der Mischung auf eine Temperatur zwischen 92 °C und 165 °C, vorzugsweise von 105 °C, die erwähnten Mikrohohlkugeln in situ bilden, und daß hierauf, gegebenenfalls nach Hinzufügen eines Katalysators, die Mischung mit einem Polyisocyanat zusammengebracht und intensiv vermischt wird, mit dem die ungesättigten flüssigen Kohlenwasserstoffe zur Reaktion gebracht werden, worauf des Gemisch, beispielsweise in einer Form, reagieren gelassen wird.

2. Verfahren nach Anspruch 1, dadurch gekennzeichnet, daß als Polyisobutylen niedermolekulares Polyisobutylen mit einem Molekulargewicht zwischen 500 und 15 000 verwendet wird.

3. Verfahren nach Anspruch 1, dadurch gekennzeichnet, daß des Verhältnis zwischen dem Anteil des Mineralöls oder des flüssigen Polyisobutylens und dem Anteil der ungesättigten Kohlenwasserstoffe zwischen 2,5 : 1, und 1 : 3, vorzugsweise 1 : 1 beträgt.

4. Verfahren nach Anspruch 1, dadurch gekennzeichnet, daß die beigemengten vorgeformten Mikrohohlkugeln bzw. die in der Mischung in situ gebildeten Mikrohohlkugeln einen Durchmesser zwischen 0,01 und 0,1 mm aufweisen.

5. Verfahren nach Anspruch 1, dadurch gekennzeichnet, daß der Mischung zusätzlich Füllstoffe, beispielsweise Riechstoffe, Pigmente und/oder Stabilisatoren, beigemengt werden.

6. Verfahren nach einem der Ansprüche 1 bis 5, dadurch gekennzeichnet, daß vor dem Einbringen des Gemisches in eine Form in diese eine Schicht, vorzugsweise aus luftdurchlässigem Material, oder eine Folie, beispielsweise aus Polyäthylen, eingelegt wird, so daß nach dem Entformen die Masse zumindest teilweise durch diese Schicht oder Folie abgedeckt ist.

7. Verfahren nach Anspruch 6, dadurch gekennzeichnet, daß als Schicht ein textiles Material und/oder ein natürliches oder künstliches Fell verwendet wird.

8. Verfahren nach Anspruch 6, dadurch gekennzeichnet, daß als Schicht eine Schuhsohle verwendet wird.

9. Verfahren nach einem der Ansprüche 1 bis 5, dadurch gekennzeichnet, daß als Form die Ausnehmung eines Formkörpers, vorzugsweise aus einem elastomeren Schaum, beispielsweise aus PUR-Schaum oder aus Polyäthylenschaum verwendet wird, in welchem die ausreagierte Masse verbleibt.

10. Verfahren nach Anspruch 9, dadurch gekennzeichnet, daß der Formkörper wenigstens eine nach einer Seite offene Ausnehmung aufweist, in welche das Gemisch eingefüllt wird, und daß diese Ausnehmung nach dem Einfüllen des Gemisches durch eine Folie oder Schicht abgedeckt wird.

11. Verfahren nach Anspruch 9 und 10, dadurch gekennzeichnet, daß als Formkörper eine Schuhsohle, insbesondere eine Einlagesohle oder eine Zwischensohle, verwendet wird, wobei die Ausnehmungen im Bereich des Ballens und der Ferse vorgesehen sind, und daß vorzugsweise in die Ausnehmungen das Gemisch in einer solchen Menge eingefüllt wird, daß die Masse ein wenig aus der Ausnehmung herausragt.

12. Verfahren nach einem der Ansprüche 1 bis 6, dadurch gekennzeichnet, daß die Masse in einer Form vorgeformt wird, daß die vorgeformte Masse in eine den Abmessungen eines herzustellenden Formkörpers entsprechende weitere Form eingelegt wird, und daß der freibleibende Raum dieser weiteren Form mit einem den Formkörper bildenden, vorzugsweise polyurethanbildenden, Material, ausgefüllt wird.

13. Verfahren nach einem der Ansprüche 1 bis 6, dadurch gekennzeichnet, daß die Masse in einer Form vorgeformt wird und an einem in einer weiteren Form vorgeformten Formkörper, vorzugsweise aus Polyäthylenschaum oder PUR-Schaum, beispielsweise durch Kleben, befestigt wird.

14. Verfahren nach einem der Ansprüche 1 bis 13, dadurch gekennzeichnet, daß die Erwärmung der Mischung infolge der bei Anwesenheit des Katalysators auftretenden Reaktionswärme erfolgt.

15. Masse für die Abstützung von Teilen, insbesondere Körperteilen, dadurch gekennzeichnet, daß sie das Reaktionsprodukt folgender Bestandteile enthält :

a) gegenüber Isocyanat chemisch inertes Mineralöl oder flüssiges Polyisobutylen,

b) ungesättigte flüssige Kohlenwasserstoffe mit endständigen Hydroxylgruppen, vorzugsweise Polybutadien,

c) ein Polyisocyanat,

d) ein bei der Polyurethanherstellung üblicher Vernetzer, beispielsweise Äthylhexandiol,

e) Mikrohohlkugeln, deren dünne Hülle aus Vinylidenchlorid-Copolymerisat besteht und deren Inneres ein Gas enthält, vorzugsweise mit einem Durchmesser zwischen 0,01 und 0,1 mm,

f) gegebenenfalls Füllstoffe wie beispielsweise Riechstoffe, Pigmente und/oder Stabilisatoren, und daß sie eine Dichte von etwa 0,20 bis 0,85, eine Bruchdehnung von mehr als 420 % und eine Härte nach Shore A von 1 bis 25 aufweist.

**Claims**

1. Process for producing a composition for supporting parts, in particular parts of the human body, said composition being based on a synthetic plastics material comprising polyurethane linking and containing hollow microspheres, characterized in that there are mixed one with the other mineral oil or liquid polyisobutylene being inert relative to isocyanate, unsaturated liquid hydrocarbons comprising terminal hydroxy groups, preferably polybutadiene, and a cross linking agent, for example ethyl hexanediol, as usually used in polyurethane production, in that there are added to this mixture or to a component forming this mixture either preformed hollow microspheres, the thin shell of which consists of vinylidene chloride copolymer and the interior of which contains a gas, or particles, containing an inflating agent, of vinylidene chloride copolymer, from which particles said mentioned hollow microspheres are formed in situ when heating the mixture to a temperature between 92 °C and 165 °C, preferably 105 °C, and in that subsequently the mixture is, optionally after an addition of a catalyst, combined with a polyisocyanate and intensely mixed, the polyisocyanate being caused to react with the unsaturated liquid hydrocarbons, whereupon the mixture is, for example within a mould, allowed to react.

2. Process as claimed in claim 1, characterized in that the polyisobutylene used is a low molecular weight polyisobutylene having a molecular weight between 500 and 15 000.

3. Process as claimed in claim 1, characterized in that the ratio between the proportion of the mineral oil and the liquid polyisobutylene and the proportion of the unsaturated hydrocarbons is between 2.5 : 1 and 1 : 3 and is preferably 1 : 1.

4. Process as claimed in claim 1, characterized in that the added preformed hollow microspheres and, respectively, the hollow microspheres formed in situ in the mixture have a diameter between 0.01 and 0.1 mm.

5. Process as claimed in claim 1, characterized in that there are additionally incorporated into the mixture fillers, for example scents, pigments and/or stabilizers.

6. Process as claimed in any of claims 1 to 5, characterized in that, prior to introducing the mixture into a mould, a layer, preferably of air-permeable material, or a foil, for example of polyethylene, is placed into the mould, so that the composition is, after removal from the mould, at least partially covered by this layer or foil.

7. Process as claimed in claim 6, characterized in that a textile material and/or a natural or artificial fur is used as the layer.

8. Process as claimed in claim 6, characterized in that a shoe sole is used as the layer.

9. Process as claimed in any of claims 1 to 5, characterized in that the mould used is the recess of a shaped body, preferably of an elastomeric foam such as for example polyurethane foam or polyethylene foam, the reacted compound remaining within the shaped body.

10. Process as claimed in claim 9, characterized in that the shaped body has at least one recess being open in direction to one side, the mixture being filled into this recess, and in that this recess is, after having been filled with the mixture, covered by a foil or layer.

11. Process as claimed in claims 9 and 10, characterized in that the shaped body used is a shoe sole, in particular an insole or an intermediate sole, the recesses being provided within the area of the ball and of the heel, and in that, preferably, the mixture is filled into the recesses in such an amount that the composition extends to some degree out of the recess.

12. Process as claimed in any of claims 1 to 6, characterized in that the composition is preformed within a mould, in that the preformed composition is placed into a further mould corresponding to the dimensions of the shaped body to be produced and in that the remaining free space of this further mould is filled with a material, preferably a polyurethane-forming material, forming the shaped body.

13. Process as claimed in any of claims 1 to 6, characterized in that the composition is preformed within a mould and is fixed, for example by glueing, to a shaped body, preferably of polyethylene foam or polyurethane foam, having been preformed within a further mould.

14. Process as claimed in any of claims 1 to 13, characterized in that heating of the mixture is effected on account of the heat of reaction generated in presence of the catalyst.

15. Composition for supporting of parts, in particular body parts, characterized in that it contains the reaction product of the following constituents :

a) mineral oil or liquid polyisobutylene being chemically inert relative to isocyanate,

b) unsaturated liquid hydrocarbons having terminal hydroxy groups, preferably polybutadiene,

c) a polyisocyanate,

d) a cross linking agent, for example ethyl hexanediol, as usual in polyurethane production,

e) hollow microspheres, the thin shell of which consists of a vinylidene chloride copolymer and the interior of which contains a gas and the diameter of which is preferably between 0.01 and 0.1 mm,

f) optionally fillers such as for example scents, pigments and/or stabilizers, and in that the composition has a density of approximately 0.20 to 0.85, an elongation at fracture of more than 420 percent and a hardness of 1 to 25 according to Shore A.

**Revendications**

1. Procédé de fabrication d'une masse pour le soutien d'éléments, plus particulièrement de parties du corps humain, sur la base d'une matière plastique contenant des microbilles creuses avec une liaison polyuréthanne, caractérisé en ce que l'on mélange ensemble une huile minérale, inerte vis-à-vis de l'isocyanate, ou du polyisobutylène liquide, des hydrocarbures insaturés liquides avec des groupes hydroxyles terminaux, de préférence du polyisobutadiène, et un réticulant usuel dans la fabrication du polyuréthanne, par exemple l'éthylhexanediol, en ce que l'on ajoute, à ce mélange ou à un constituant formant ce mélange, soit des microbilles creuses préformées, dont l'enveloppe mince est constituée d'un copolymère de chlorure de vinylidène et dont l'intérieur contient un gaz, soit des particules en copolymère de chlorure de vinylidène contenant un agent moussant, à partir desquelles se forment in situ les microbilles en question par échauffement du mélange à une température comprise entre 92 °C et 165 °C, de préférence de 105 °C, et en ce qu'ensuite, éventuellement après ajout d'un catalyseur, le mélange est mis en présence de et intimement mélangé à un polyisocyanate, avec lequel les hydrocarbures insaturés liquides sont amenés à réagir, après quoi le mélange est laissé à réagir, par exemple dans un moule.

2. Procédé selon la revendication 1, caractérisé en ce que l'on utilise, comme polyisobutylène, du polyisobutylène de bas poids moléculaire avec un poids moléculaire compris entre 500 et 15 000.

3. Procédé selon la revendication 1, caractérisé en ce que le rapport entre la teneur en huile minérale ou en polyisobutylène liquide et la teneur en hydrocarbures insaturés est compris entre 2,5 : 1 et 1 : 3, de préférence égal à 1 : 1.

4. Procédé selon la revendication 1, caractérisé en ce que les microbilles creuses préformées ajoutées ou les microbilles creuses formées in situ dans le mélange ont un diamètre compris entre 0,01 et 0,1 mm.

5. Procédé selon la revendication 1, caractérisé en ce que l'on ajoute en plus au mélange des charges, par exemple des substances odorantes, des pigments et/ou des stabilisateurs.

6. Procédé selon l'une des revendications 1 à 5, caractérisé en ce que, avant l'introduction du mélange dans un moule, on place dans celui-ci une couche, de préférence en une matière perméable à l'air, ou une feuille, par exemple en polyéthylène, de telle manière qu'après le démoulage, la masse soit recouverte au moins partiellement par cette couche ou par cette feuille.

7. Procédé selon la revendication 6, caractérisé en ce que l'on utilise comme couche une matière textile et/ou une fourrure naturelle ou synthétique.

8. Procédé selon la revendication 6, caractérisé en ce que l'on utilise comme couche une semelle de chaussure.

9. Procédé selon l'une des revendications 1 à 5, caractérisé en ce que l'on utilise comme moule l'évidement d'un corps moulé, de préférence en une mousse élastomère, par exemple en une mousse de polyuréthanne ou en une mousse de polyéthylène, dans lequel est maintenue la masse ayant réagi.

10. Procédé selon la revendication 9, caractérisé en ce que le corps moulé présente au moins un évidement, ouvert sur un côté, dans lequel le mélange est versé et en ce que ce creux est recouvert par une feuille ou une couche, après remplissage par le mélange.

11. Procédé selon les revendications 9 et 10, caractérisé en ce que l'on utilise comme corps moulé une semelle de chaussure, plus particulièrement une semelle orthopédique ou une semelle intermédiaire, les évidements étant prévus dans la zone de la plante des pieds et du talon, et en ce que, de préférence, l'on verse le mélange dans les évidements en une quantité telle que la masse émerge un peu de l'évidement.

12. Procédé selon l'une des revendications 1 à 6, caractérisé en ce que la masse est préformée dans un moule, en ce que la masse préformée est placée dans un autre moule correspondant aux dimensions d'un corps moulé à fabriquer et en ce que l'espace resté libre de cet autre moule est rempli avec une matière constituant le corps moulé, de préférence formant du polyuréthanne.

13. Procédé selon l'une des revendications 1 à 6, caractérisé en ce que la masse est préformée dans un moule et est fixée, par exemple par collage, à un corps moulé, de préférence en mousse de polyéthylène ou en mousse de polyuréthanne, qui a été préformé dans un autre moule.

14. Procédé selon l'une des revendications 1 à 13, caractérisé en ce que l'échauffement du mélange est réalisé par la chaleur de la réaction se produisant en présence du catalyseur.

15. Masse pour le soutien d'éléments, plus particulièrement de parties du corps, caractérisée en ce qu'elle contient le produit de réaction des constituants suivants :

a) une huile minérale, chimiquement inerte vis-à-vis de l'isocyanate, ou du polyisobutylène liquide,

b) des hydrocarbures insaturés liquides avec des groupes hydroxyles terminaux, de préférence du polybutadiène,

c) un polyisocyanate,

d) un réticulant usuel dans la fabrication du polyuréthanne, par exemple l'éthylhexanediol,

e) des microbilles creuses, dont l'enveloppe mince est constituée d'un copolymère de chlorure de vinylidène et dont l'intérieur contient un gaz, ayant un diamètre compris de préférence entre 0,01 et 0,1 mm,

f) éventuellement, des charges, comme par exemple des substances odorantes, des pigments et/ou des stabilisateurs, et en ce qu'elle présente une densité d'environ 0,20 à 0,85, un allongement à la rupture supérieur à 420 % et une dureté Shore A de 1 à 25.